# EUROPEAN PATENT APPLICATION

(11) **EP 2 412 760 A2**
(43) Date of publication of application: **01.02.2012**
(21) Application number: 11007544.7
(22) Date of filing: 12.01.2007
(51) Int. Cl.: C08L 101/00, C08J 3/00, C08J 5/24

(54) **Resinous materials, articles made therewith and methods of producing same**

(30) Priority: 21.01.2006 GB 0601256
(62) Divisional of application: 07704897.3
(71) Applicant: Advanced Composites Group Limited, Heanor, Derbyshire DE75 7SP (GB)
(72) Inventor: Steele, Mark Raymond, Heanor, Derbyshire DE75 7SP (GB); Choudry, Arshad, Heanor, Derbyshire DE75 7SP (GB)
(74) Representative: Swindell & Pearson Limited

(57) **Abstract**

A curable resinous material, and a method of manufacturing same, the curable resinous material comprising a resinous matrix material (R) with thermoplastic material (TP) distributed therein, some of said thermoplastic material (TP) being substantially fully dissolved in the matrix resin material (R) with other of the thermoplastic materials (TP) being only partially dissolved within the matrix material (R) when the resinous material is cured. The invention also provides a curable resinous material, and a method of manufacturing same, comprising a resinous matrix material (R) and a thermoplastic material (TP) distributed within the resinous matrix material (R) so that at least some of said thermoplastic material (TP) remains partially undissolved in the resinous matrix material (R) when cured.

## Description

The present invention relates to resinous materials, articles made using resinous materials and methods of producing same, and particularly but not exclusively to toughened fibre-reinforced composite articles and resinous materials and methods for making such articles.

Thermosetting resins are widely used as the matrix to support and hold together fibres to form fibre-reinforced resinous composite materials which find many industrial applications as a result of their well known characteristics.

In such materials, the resin acts to transfer applied loads to the fibres and provides the cured structure with its environmental characteristics. For example, the resin generally determines the maximum temperature an article or structure made therewith can withstand, the structure's resistance to water and other external agents. Importantly the toughness, or otherwise, of the matrix generally determines the toughness of the structure.

However, thermoset resins are generally glassy and tend to be brittle when cured and articles or structures made therefrom often suffer from poor toughness characteristics and have limited resistance to impact damage. Such characteristics can severely limit the potential applications of such structures.

Composite structures made using thermoset resins are therefore vulnerable to impact damage. The type of damage and likelihood of an impact event is clearly dependent on the application and location of the composite structure. The toughness of a given matrix is generally considered to be the ability of the matrix to withstand an impact event. The greater the matrix toughness, the more able a structure is to maintain performance following an impact event. Matrix toughness is normally assessed using a Compression Strength After Impact test (CSAI). This test involves impacting a defined test specimen with a defined energy and measuring the retained compression strength following the impact event. The higher the retained compression strength the more damage tolerant or tough the composite structure is.

Fibre-reinforced composite materials are often formed as prepregs for moulding. The resin in such prepregs is in an uncured or a partial (B-stage) state of cure, such that the moulding material is generally flexible to facilitate moulding. The resin can be wholly or partially impregnated into the fibre-reinforcement material, or may be adhered thereto with no significant impregnation.

When the fibre-reinforced moulding materials or prepregs are cured at the desired conditions of temperature and pressure, the resin hardens (thermo set cure), generally becoming brittle and glassy as aforesaid.

In an attempt to improve the toughness of thermoset resins, it is known to add thermoplastic resin.

There are two conventional methods. In the first, the thermoplastic is fully pre-dissolved into the resin and during the cure cycle the thermoplastic completely precipitates out into fully undissolved particles forming a second phase (commonly known as phase separation). This process is well known and works well with high temperature curing systems. However, this technique is less effective at lower temperatures or rapid cure times. In the second, the thermoplastic is completely insoluble at or below the cure temperatures and thus does not dissolve at all during manufacture or cure. This process is less effective because the undissolved particles have limited energy absorbing abilities.

Furthermore, with the existing systems, there is a limit on the amount of thermoplastic that can be added to the thermoset resin as dissolved thermoplastic tends to increase the viscosity of the mixture and too much can elevate the viscosity to unacceptable levels. Therefore, conventionally the level of thermoplastic that can be added is limited to between 15 and 20% of the weight of the mixture.

As well as being used as a matrix for composite articles, thermoset resins also find application as adhesives, particularly as adhesive films for bonding components of resin/fibre composites and metals.

The toughness characteristics of such resin adhesives can be important in the overall toughness characteristics of structures bonded thereby, or the bond itself.

According to the present invention there is provided a curable resinous material comprising a resinous matrix material and thermoplastic material distributed within the resinous matrix material, some of said thermoplastic material is fully soluble in the resinous matrix material and some of the thermoplastic material is only partially soluble in the resinous matrix material when subjected to cure temperatures of up to 180°C, the partially soluble thermoplastic material comprising particles with a mean diameter size of between 5µm (microns) and 100µm (microns) that reduces to between 1µm (micron) and 80µm (microns).

According to the present invention there is provided a curable resinous material comprising a resinous matrix material and thermoplastic material distributed within the resinous matrix material, some of said thermoplastic material being substantially fully dissolved in the resinous matrix material and other of the thermoplastic material being only partially dissolved in the resinous matrix material when cured.

Preferably the dissolved thermoplastic material is distributed within the resinous matrix material to form a generally homogenous mix. The dissolved thermoplastic material may preferably comprise a thermoplastic resin, may be particulate, and may comprise one or more of a Polyether Sulphone, Polyetherimide, Polyarylsulfone, Polyphenylene Sulfide, Polyimide, Polysiloxane, Polyamide and Rubber. Any suitable soluble thermoplastic may be used. The molecular weight, end group functionality and end termination can vary for each of the aforementioned thermoplastics, all variations can be considered for use as the dissolved thermoplastic material.

Preferably the other of said thermoplastic material is distributed within the mix of resinous matrix material and dissolved thermoplastic to preferably form a generally homogenous material.

The said other thermoplastic material may comprise a thermoplastic resin and may be the same thermoplastic material as the said some thermoplastic material. Preferably at least some of the said other thermoplastic material comprises partially undissolved particles when cured.

Preferably the said other thermoplastic material comprises particles with a mean diameter size of between 5µm (microns) and 100µm (microns), most preferably 20-80µm before cure.

Preferably the said other thermoplastic material comprises partially undissolved particles following cure, with a mean undissolved particle size of between 1µm (microns) and 80µm (microns) and most preferably 5µm (microns) and 50µm (microns).

The said other thermoplastic material may comprise different physical and/or chemical characteristics than said some thermoplastic material which may enable it to remain at least partially undissolved.

The said other thermoplastic material may comprise a different material to the said some thermoplastic material.

Preferably the resinous material is heat curable. Preferably the resinous matrix material comprises a thermoset resin material which may comprise one or more of an epoxy, bismaleimide and cyanate resin.

The curable resinous material may comprise a resinous matrix material for use in forming fibre-reinforced composite materials.

The curable resinous material may comprise an adhesive, and may be in the form of a film.

Preferably the curable resinous material is curable at temperatures up to 180°C and preferably at temperatures within the range 60°C to 130°C. Preferably the curable resinous material is curable under pressure conditions of between 0.5 and 10 bar and preferably for between ten minutes and sixteen hours.

According to a second aspect of the present invention there is provided a moulding material comprising a curable resinous material as defined in any of the preceding twelve paragraphs and a fibrous reinforcement material.

The curable resinous material may be at least partially or wholly impregnated into the fibrous reinforcement material.

The moulding material may comprise a prepreg.

According to a further aspect of the present invention there is provided cured resinous material comprising resinous matrix material with thermoplastic material therein, some of said thermoplastic material is fully dissolved in the resinous matrix material and some of the said thermoplastic material is only partially dissolved in the resinous matrix material from particles with a mean diameter size of between 5µm (microns) and 100µm (microns) to particles of undissolved thermoplastic with an average diameter size of between 1µm (micron) and 80µm (micron)s.

According to a further aspect of the present invention there is provided cured resinous material comprising resinous matrix material with thermoplastic material therein, cured to a condition wherein some of said thermoplastic is substantially fully dissolved and at least some other of the said thermoplastic material is partially dissolved.

Preferably the said at least some other partially dissolved thermoplastic material forms particles or grains of undissolved thermoplastic within the resinous matrix material. Preferably at least some, but desirably each such particle is surrounded by a region of dissolved thermoplastic material.

Preferably the degree of dissolution of the said other thermoplastic material in said region increases, desirably gradually, in a direction away from the undissolved thermoplastic material.

Preferably the average diameter of undissolved particle or grain is in the range 1 to 80 microns, and most preferably 5 to 50 microns.

Preferably the cured resinous material is at least partially impregnated into a fibrous reinforcement material to form a fibre-reinforced composite structure or article.

The cured resinous material may bond different sections or elements of a composite structure, such as a prepreg to a syntactic or honeycomb core to form a structure or article. In this case the resinous material is used as an adhesive.

The invention further provides an article or structure comprising a cured resinous material as described in any of the preceding five paragraphs.

Preferably the structure or article is rigid or semi-rigid and exhibits enhanced toughness properties compared to the cured resinous matrix material without the said other thermoplastic, and more particularly without said some partially dissolved other thermoplastic material.

The article may be formed by moulding on, in or around a mould or tool. Preferably the article is formed by curing at temperatures less than 180°C, and preferably at temperatures between 60°C and 130°C. The article may be formed under pressure conditions of between 0.5 bar and 10 bar. The article is preferably formed by curing for a period of between ten minutes and sixteen hours.

According to a fourth aspect of the present invention there is provided a method of producing a curable resinous material comprising mixing curable resinous matrix material with thermoplastic material under conditions such that at least some of the thermoplastic material is fully dissolved and other of the thermoplastic material is only partially dissolved in the resinous matrix material when the resinous material is cured.

Preferably a first thermoplastic material is mixed with the resinous matrix material under conditions in which substantially all the thermoplastic material dissolves into the resinous matrix material, preferably to form a generally homogenous blend.

Preferably the first thermoplastic material is mixed into the resinous matrix material at temperatures below 180°C and preferably in the range 100°C and 130°C.

The first thermoplastic material may comprise one or more of a Polyether Sulphone, Polyetherimide, Polyarylsulfone, Polyphenylene Sulfide, Polyimide, Polysiloxane, Polyamide and Rubber. Any suitable soluble thermoplastic may be used. The molecular weight, end group functionality and end group termination can vary for each of the aforementioned thermoplastics, all variations can be considered for use as the dissolved thermoplastic material.

The first thermoplastic material is preferably mixed in as a particulate, and preferably with an average particle size in the range of 1µm to 200µm.

Preferably a second thermoplastic material is mixed into the blend of resinous matrix material and first thermoplastic material. Preferably the second thermoplastic material used is also particulate and is mixed under conditions such that it only partly dissolves. Preferably the second
thermoplastic material has an average particle size in the range 5µm to 100µm most preferably 20-80 µm. Preferably the resinous material is generally homogenous.

The second thermoplastic material may be mixed at temperatures up to 120°C.

The second thermoplastic material may comprise one or more of a Polyether Sulphone, Polyetherimide, Polyarylsulfone, Polyphenylene Sulfide, Polyimide, Polysiloxane, Polyamide and Rubber. Any suitable soluble thermoplastic may be used. The molecular weight, end group functionality and end group termination can vary for each of the aforementioned thermoplastics, all variations can be considered for use as the second thermoplastic material.

Preferably the resinous matrix material is a thermoset resin, and may comprise one or more of epoxy phenol novolaks, epoxy novolaks, epoxy cresol novolaks, bisphenol A epoxy resins, bis phenol F epoxy resins, multifunctional resins, multifunctional epoxy resins, phenolics, cyanate esters, bismaleimides, polyesters, benzoxazines, other thermosetting materials. The resinous material can contain up to 70% by weight, but ideally less than 40% by weight additives not covered by the above. These additives may fall into a number of categories, such as flame retardants, fillers, curing agents, accelerators, viscosity modifiers, rubbers, rubber adducts and thermoplastics including combinations and blends of the above and others well known to those skilled in the art.

According to a further embodiment of the present invention there is provided a method of producing cured resinous material, comprising the steps of
(a) preparing a curable resinous material by mixing thermoplastic material with a curable resinous matrix material, and
(b) curing said resinous material under conditions so that some of said thermoplastic material is fully dissolved in the resinous matrix material and some of said thermoplastic material is only partially dissolved from a mean particle size of between 5µm (microns) and 100µm (microns) to a mean particle size of between 1µm (micron) and 80µm (microns).

According to a further embodiment of the present invention there is provided a method of producing cured resinous material, comprising the steps of
(a) preparing a curable resinous material by mixing thermoplastic material with a curable resinous matrix material, and
(b) curing said resinous material under conditions so that some of said thermoplastic material is substantially fully dissolved in the resinous matrix material and other of said thermoplastic material is only partially dissolved.

Preferably the resinous material is prepared using a method described above in any of paragraphs thirty six to forty four.

Preferably the resinous material is cured at temperatures no greater than 180°C, and preferably at temperatures within the range 60°C to 130°C.

Preferably the resinous material is cured under pressure conditions of between 0.5 bar and 10 bar.

Preferably the resinous material is cured for between ten minutes and sixteen hours.

Preferably the partially undissolved thermoplastic material in the cured material forms particles or grains within the cured resinous matrix material. Preferably at least some, but desirably each such particle or grain is surrounded by a region of dissolved thermoplastic material. Preferably the degree of dissolution of the thermoplastic material in said region increases generally in a direction away from the undissolved thermoplastic.

Preferably the average diameter of undissolved particle or grain is in the range 1 to 80 microns, and most preferably 5 to 50 microns.

Preferably the curable resinous material is located on a surface of, or at least partially impregnated into, one or more fibrous layers, such as dry fibre reinforcements or prepregs before cure preferably to impregnate said layer(s) when cured.

The resinous material may be located between two or more parts or sections of a composite structure to bond said parts or sections together when cured.

The invention also provides articles and structures comprising cured resinous material as described above.

The article or structure may be moulded and cured using conventional curing techniques for fibre-reinforced composite articles, such as autoclave curing and vacuum-bag curing.

The article may be cured on, in or around a mould or tool.

According to a sixth aspect of the present invention there is provided a curable resinous material comprising a resinous matrix material and thermoplastic material distributed within the resinous matrix material, at least some of said thermoplastic material comprising partially undissolved particles in the resinous matrix material when cured.

Preferably the thermoplastic material is distributed within the resinous matrix material to preferably form a generally homogenous material.

The said thermoplastic material may comprise a thermoplastic resin.

Preferably the thermoplastic material comprises particles with a mean size of between 5µm and 100µm, most preferably 20-80µm before cure.

Preferably the partially undissolved particles have an average diameter of between 1 and 80 microns, and most preferably of between 5 and 50 microns diameter.

Preferably the curable resinous material is curable at temperatures up to 180°C and preferably at temperatures within the range 60°C to 130°C.

Preferably the curable resinous material is curable under pressure conditions of between 0.5 bar and 10 bar and preferably for between ten minutes and sixteen hours.

Preferably the resinous material is heat curable. Preferably the resinous matrix material comprises a thermoset resin material which may comprise one or more of an epoxy, bismaleimide and cyanate resin.

The curable resinous material may comprise a resinous matrix material for use in forming fibre-reinforced composite materials.

The curable resinous material may comprise an adhesive, and may be in the form of a film.

According to a seventh aspect of the present invention there is provided a moulding material comprising a curable resinous material as defined in any of the preceding ten paragraphs and a fibrous reinforcement material.

The curable resinous material may be at least partially or wholly impregnated into the fibrous reinforcement material.

The moulding material may comprise a prepreg.

According to an eighth aspect of the present invention there is provided an article comprising a resinous matrix material with thermoplastic material therein, cured to a condition wherein at least some of the said thermoplastic material is present as partially dissolved particles.

Preferably at least some, but desirably each such particle has an undissolved core or grain surrounded by a region of dissolved thermoplastic material. Preferably the degree of dissolution of the thermoplastic material in said region increases, desirably gradually, in a direction away from the undissolved thermoplastic material.

Preferably the average size of undissolved particle core or grain is in the range 1 to 80 microns and most preferably 5 to 50 microns.

Preferably the article comprises fibrous reinforcement material in which the cured resinous material is impregnated to form a fibre-reinforced composite structure.

Preferably the article is rigid or semi-rigid and exhibits enhanced toughness properties compared to the cured resinous matrix material without the said thermoplastic, and more particularly without said some partially undissolved thermoplastic material.

The article may be formed by moulding on, in or around a mould or tool. Preferably the article is formed by curing at temperatures less than 180°C, and preferably at temperatures between 60°C and 130°C. The article may be formed under pressure conditions of between 0.5 bar and 10 bar. The article is preferably formed by curing for a period of between ten minutes and sixteen hours.

According to a ninth aspect of the present invention there is provided a method of producing a curable resinous material comprising mixing curable resinous matrix material with thermoplastic material under conditions such that at least some thermoplastic material is partially undissolved in the resinous matrix material when the resinous material is cured.

Some thermoplastic material may be substantially fully dissolved in the resinous matrix material and other of the thermoplastic material only partially dissolved.

Preferably the thermoplastic material used is particulate and is preferably mixed into the resinous matrix material under conditions such that it remains partially undissolved. Preferably the thermoplastic material has an average particle size in the range 5µm to 100µm most preferably 20-80 µm. Preferably the resinous material is generally homogenous.

The thermoplastic material may be mixed at temperatures up to 120°C.

The thermoplastic material may comprise one or more of a Polyether Sulphone, Polyetherimide, Polyarylsulfone, Polyphenylene Sulfide, Polyimide, Polysiloxane, Polyamide and Rubber. Any suitable thermoplastic however may be used. The molecular weight, end group functionality and end group termination can vary for each of the aforementioned thermoplastics, all variations can be considered for use as the thermoplastic material.

Preferably the resinous matrix material is a thermoset resin, and may comprise one or more of epoxy phenol novolaks, epoxy novolaks, epoxy cresol novolaks, bisphenol A epoxy resins, bis phenol F epoxy resins, multifunctional resins, multifunctional epoxy resins, phenolics, cyanate esters, bismaleimides, polyesters, benzoxazines, other thermosetting materials. The resinous material can contain up to 70% by weight, but ideally less than 40% by weight additives not covered by the above. These additives may fall into a number of categories, such as flame retardants, fillers, curing agents, accelerators, viscosity modifiers, rubbers, rubber adducts and thermoplastics including combinations and blends of the above and others well known to those skilled in the art.

According to a tenth embodiment of the present invention there is provided a method of producing cured resinous material, comprising the steps of
(a) preparing curable resinous material by mixing thermoplastic material with resinous matrix material, and
(b) curing said resinous material under conditions so that at least some of said thermoplastic material remains partially undissolved in the resinous matrix material.

Preferably the resinous material is prepared using a method described above in any of paragraphs seventy six to eighty one.

Preferably the resinous material is cured at temperatures no greater than 180°C, and preferably at temperatures within the range 60°C to 130°C.

Preferably the resinous material is cured under pressure conditions of between 0.5 bar and 10 bar.

Preferably the resinous material is cured for between ten minutes and sixteen hours.

Preferably the undissolved thermoplastic material in the cured material forms particles or grains within the cured resinous matrix material. Preferably at least some, but desirably each particle or grain is surrounded by a region of dissolved thermoplastic material. Preferably the degree of dissolution of the thermoplastic material in said region increases generally in a direction away from the undissolved thermoplastic.

Preferably the curable resinous material is located on a surface of, or at least partially impregnated into, one or more fibrous layers, such as dry fibre reinforcements or prepregs, preferably to impregnate said layer(s) when cured.

Curable resinous material may be located between two or more parts or sections of a composite structure to bond said parts or sections together.

The invention further provides articles and structures comprising cured resinous material as described in the preceding paragraphs.

The articles or structures are preferably moulded and cured using conventional curing techniques for fibre-reinforced composite articles, such as autoclave curing and vacuum-bag curing.

The articles and structures may be cured on, in or around a mould or tool.

Embodiments of the present invention will now be described by way of example only, with reference to the accompanying drawings in which:-
Fig. 1 is a schematic representation of a method for forming a cured resinous material in accordance with one embodiment of the present invention;
Fig. 2 is a schematic representation of a further method of forming a cured resinous material in accordance with a second embodiment of the present invention,
Fig. 3 is a diagrammatic cross-section of a method of forming a moulded article using resinous material of the present invention; and
Fig. 4 is a highly diagrammatic cross-sectional representation of cured resinous material according to the present invention.

Referring to the drawings, there is provided a curable resinous material, materials and articles produced therewith and methods of producing such materials and articles.

A curable resinous material according to one embodiment of the present invention, comprises a resinous matrix material with thermoplastic material distributed therein, some of said thermoplastic material being substantially fully dissolved in the matrix resin material with other of the thermoplastic material being only partially dissolved within the matrix material when the resinous material is cured.

The resinous matrix material comprises a thermosetting resin or blend of resins. Resins from the epoxies, bismaleimides, cyanates and benzoxazines can be used. Particular resins include epoxy phenol novolaks, epoxy novolaks, epoxy cresol novolaks, bisphenol A epoxy resins, bis phenol F epoxy resins, multifunctional resins, multifunctional epoxy resins, phenolics, cyanate esters, bismaleimides, polyesters, benzoxazines, other thermosetting materials. The resinous material can contain up to 70% by weight, but ideally less than 40% by weight additives not covered by the above. These additives may fall into a number of categories, such as flame retardants, fillers, curing agents, accelerators, viscosity modifiers, rubbers, rubber adducts and thermoplastics including combinations and blends of the above and others well known to those skilled in the art.

The said some thermoplastic material may comprise one or more of a Polyether Sulphone, Polyetherimide, Polyarylsulfone, Polyphenylene Sulfide, Polymide, Polysiloxane, Polyamide and Rubber. Any suitable soluble thermoplastic may be used. The molecular weight, end group functionality and end group termination can vary for each of the aforementioned thermoplastics, all variations can be considered for use as the dissolved thermoplastic material.

The said other of the thermoplastic material may comprise one or more of a Polyether Sulphone, Polyetherimide, Polyarylsulfone, Polyphenylene Sulfide, Polyimide, Polysiloxane, Polyamide and Rubber. Any suitable soluble thermoplastic may be used. The molecular weight, end group functionality and end group termination can vary for each of the aforementioned thermoplastics, all variations can be considered for use as the dissolved thermoplastic material.

The said some thermoplastic material can be the same or may be different to the said other thermoplastic material. The differences may be in their physical characteristics, such as their particle size, surface area or their chemical characteristics.

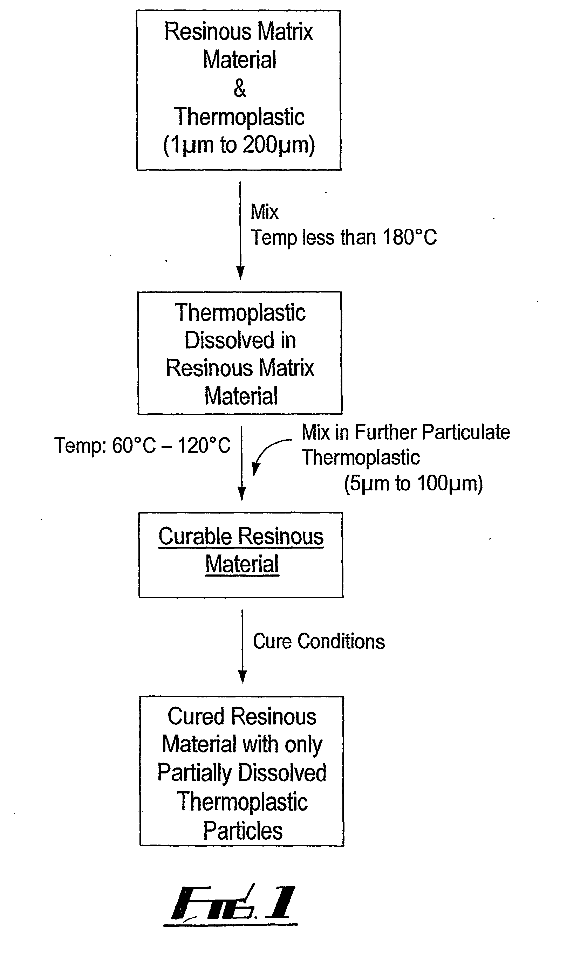

Fig. 1 is a schematic representation of a method of producing curable resinous material in accordance with this embodiment.

The method comprises blending thermoplastic resin particles into the resinous matrix material under conditions such that the thermoplastic particles substantially completely dissolve within the resinous matrix material. The general range of conditions of temperature, time and pressure are as follows:
Temperature - 100°C to 130°C, although temperatures up to 180°C can be used.
Duration of mixing - twenty minutes to five hours.
Vacuum Pressure - 0.5 bar to 1.0 bar.

The actual conditions chosen in any application are determined by, amongst other things, the type of resinous matrix material used, the thermoplastic material used, the nature and intended applications for the articles to be produced, and in particular the desired toughness characteristics. For example, the process may be performed without vacuum pressure. Specific examples are provided further in this specification.

Once the thermoplastic material is dissolved into the resinous matrix material and blended to form a generally homogenous mixture, further thermoplastic material is added under conditions that do not favour the complete dissolution of the further thermoplastic in the resinous matrix material. It is an important feature of the present invention that thermoplastic material remains partially undissolved, following cure.

The said same thermoplastic material may be added as particles with an average size of between 1 and 100µm. Clearly the smaller the size, the more quickly the material will be dissolved into the matrix material under given conditions. The said other thermoplastic material is added as particles with a mean size of between 5 and 100µm, but more preferably 20-80µm. The size can be determined according to prevailing conditions to achieve only partial dissolution.

Once the further thermoplastic material has been mixed, preferably to be generally evenly distributed throughout the mixture, the resinous material can then be further processed in accordance with the desired application.

Applications of particular interest are in the formation of fibre-reinforced moulding materials and prepregs. For such applications, the resinous material can then be applied to one or more fibrous layers in accordance with generally conventional techniques.

The materials are then further processed under conditions to cure the resinous material. Cure temperatures of up to 180°C can be employed, with preferred temperatures being in the range 60°C to 130°C. It is envisaged that a major application is in the production of moulded fibre-reinforced composite articles and again generally conventional techniques such as autoclave curing and vacuum-bag curing can be employed to produce these. Pressure conditions of between 0.5 bar and 10 bar can be employed, with cure times ranging between ten minutes and sixteen hours depending upon materials and desired characteristics and properties of the moulded article.

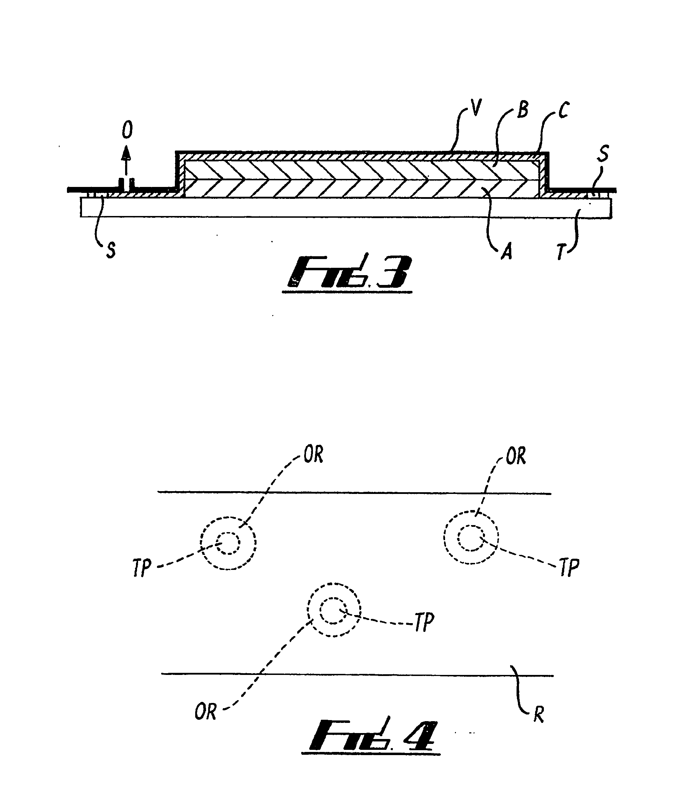

Fig. 3 is a diagrammatic illustration of two fibre-reinforced resinous prepreg layers A and B formed using the resinous material described above, using generally conventional methods, which are layered on a mould tool T for moulding according to conventional vacuum-bag techniques.

The moulding material A, B is placed on the moulding surface of the tool T. Over the top of the layers A, B is placed a breather layer C and thereover is an impermeable vacuum-bag V which is sealed to the tool, around the moulding material layers A and B by seals S. The prepregs A and B are then processed at the desired temperature, preferably between 60°C and 130°C. Air is drawn from beneath the vacuum-bag V through the outlet O to provide the requisite pressure during curing and to draw out any air from within and between the prepreg layers A, B. Additional pressure is often applied by placing the entire mould in a pressurised vessel, often referred to as an autoclave.

An important advantage of the present invention is that the cure temperatures of the resinous material can be kept to a maximum of 180°C, more preferably between 60°C and 130°C. This provides for efficiencies in the cure cycle.

Further, because the present invention does not require undissolved thermoplastic to become fully dissolved, this is not the rate determining step and so the cure time can be significantly reduced when compared to conventional techniques using thermoplastics to toughen resins.

The cure times can be kept to between thirty minutes and two hours, although the full range that can be employed is between ten minutes and sixteen hours.

It is a further advantage of the present invention that the undissolved further thermoplastic material does not act to increase the viscosity of the resinous material. Therefore, considerably more thermoplastic can be added to the resin matrix material than can be added under conventional techniques where the thermoplastic is fully dissolved. Indeed up to 20% by weight of undissolved thermoplastic can be added without any significant increase in the viscosity of the resinous material. Such enhanced levels of thermoplastic material provide for further toughening.

Indeed, in accordance with the present invention, the toughness characteristics are enhanced by between 40 and 70% when compared to resins toughened by thermoplastic additives using conventional techniques, when the advantageous conditions of time and temperature of the present invention are applied.

The cure conditions are chosen for each particular resinous material so as to ensure that at least some of the further thermoplastic material remains partially undissolved in the cured matrix resinous material. It is important to achieve the observed increases in toughness for partially undissolved particles of thermoplastic material to remain in the cured resinous material.

Fig. 4 shows a diagrammatic cross-sectional illustration of cured resinous material comprising a resin matrix R with partially dissolved thermoplastic particles TP distributed, generally evenly, throughout.

The average undissolved particle or grain size is between 1 and 80 microns diameter, but sizes of between 5 and 50 microns are most preferred.

Without wishing to be bound by theory, it is thought that the thermoplastic particles TP act to toughen the relatively brittle matrix resin R by acting to prevent the propagation of cracks or fractures through the matrix resinous material R. Cracks or fractures can be caused by damage of the resin material R through external conditions, such as impact events. Cracks generally tend to propagate through the relatively brittle resin matrix material R. However when a crack encounters one of the partially dissolved thermoplastic particles TP, the outer region OR of the thermoplastic particle which has dissolved into the resinous matrix material acts to gradually absorb and halt the progression of the crack. In systems where thermoplastic particles are not dissolved at all in the resin, the dramatic difference in physical characteristics of the thermoplastic particle and the resin matrix is believed to act to cause the crack or fracture to veer away from or 'bounce' off the thermoplastic particle and continue to propagate in another direction. However, due to the gradual change in physical properties provided by the outer regions OR (resulting from the gradual increase in the degree of dissolution of thermoplastic material into the matrix resin) it is believed that the likelihood of a crack or facture veering away from or 'bouncing' off a thermoplastic particle TP in the present invention is significantly reduced, and the toughness characteristics of the cured material and articles made therefrom, thereby significantly improved.

The following are examples of specific curable resinous materials that have been formulated and used to produce cured resinous material and moulded articles exhibiting enhanced toughness characteristics.

The following example, in accordance with the present invention, can be prepared by mixing together with stirring and in a vacuum sealed vessel to aid mixing, a thermoset matrix resin of 100 part by weight N,N,N',N'-tetraglycidyl-4,4' - diaminodiphenylmethane and 15 parts by weight of Polyether Sulphone (trade name PES grade 5003P from Sumitomo Chemical Co.) for three hours at 125°C or until the Polyether Sulphone thermoplastic is fully dissolved. The resultant mixture is then cooled to 75°C with continuous stirring whilst still under vacuum. Once the temperature of the mixture has stabilised at 75°C, 15 parts by weight of Polyether Sulphone, 10 parts by weight of Dicyandiamide and 2 parts by weight 1,1'-(4-Methyl-m-phenylene)bis(3,3-dimethylurea) is added, the resultant mixture is then mixed for twenty minutes with continuous stirring under vacuum to produce a homogeneous blend before discharging from the mix vessel into a suitable container and allowed to cool to room temperature. The resultant mixture contains both dissolved and undissolved thermoplastic material.

This mixture is then filmed or pressed using techniques known to those skilled in the art into a 280gsm carbon fibre woven fabric to produce pre-impregnated sheets ready for lamination and cure. These sheets are then plied together to form a multi-directional laminate, which is then cured for four hours at 130°C using standard autoclave curing techniques.

Subjecting such cured material to known tests, such as CSAI, shows considerable improvements in the toughness characteristics of the resin matrix.

In a further embodiment of the present invention a curable resin comprises a resinous matrix material and a thermoplastic material distributed within the resinous material so that at least some of said thermoplastic material remains partially undissolved in the resinous matrix material when cured.

In this embodiment, there is no requirement for some thermoplastic material to be substantially fully dissolved in the matrix resin material, as provided in the first embodiment.

The nature and types of resinous matrix materials and thermoplastic materials that can be used in this embodiment are generally as described above. The thermoplastic material in this embodiment is the same as described above in relation to the first embodiment with reference to the said other of the thermoplastic material.

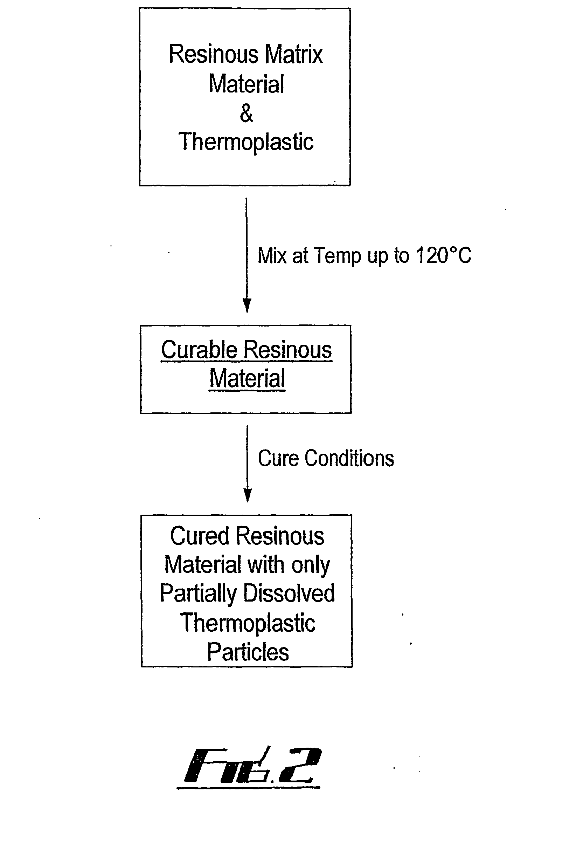

Fig. 2 is a schematic representation of a method of producing curable resinous material in accordance with this embodiment.

The method comprises blending thermoplastic resin particles into the resinous matrix material under conditions such that at least some of the thermoplastic particles are partially undissolved in the material.

Once the curable resinous material has been formed, it can be further processed in accordance with the desired application, generally as discussed above, to form moulding materials, prepregs and cured composite bodies.

Again, it is an important feature of the curable resinous material of this embodiment, that when cured, at least some of the thermoplastic material is partially undissolved, and thus only partially dissolved, in the matrix resinous material.

Again it is believed that the theory discussed above lies behind the improved toughness characteristics exhibited by the materials, structures and articles of the present invention.

The following example of specific curable resinous materials that have been formulated and used to produce cured resinous material and moulded articles exhibiting enhanced toughness characteristics.

Mix together with stirring at 75°C and in a vacuum sealed vessel to aid mixing, a thermoset matrix resin of 100 part by weight N, N, N',N' - tetraglycidyl - 4,4' - diaminodiphenylmethane, 15parts by weight of Polyether Sulphone, 10 parts by weight of Dicyandiamide and 2 parts by weight 1,1' - (4-methyl-m-phenylene) bis (3,3-dimethylurea), the resultant mixture is then mixed for 20 minutes with continuous stirring under vacuum to produce a homogeneous blend before discharging from the mix vessel into a suitable container and allowed to cool to room temperature. In accordance with the present invention, the resultant mixture contains undissolved thermoplastic material.

The resultant mixture is then filmed or pressed using techniques know to those skilled in the art into a 280gsm carbon fibre woven fabric ready for lamination and cure. These resultant, pre-impregnated sheets are then piled together to form a multi-directional laminate, which is then cured for 4hrs at 130°C using standard autoclave curing techniques.

Again, the cured resin and articles made therefrom exhibit improved toughness characteristics.

Various modifications may be made without departing from the spirit or scope of the present invention. The said some thermoplastic material may be mixed into the resinous material at any temperature up to 180°C, but preferably in the range 100 to 130°C. The mean particle size of the said other or second thermoplastic material is within the range 20µm to 100µm. The said other or second thermoplastic material is mixed into the material at temperatures within the range 60°C to 120°C, preferably under vacuum conditions.

The curable resinous materials discussed above also find application as adhesives, particularly adhesives for use in bonding fibre-reinforced composites together or with other material, such as metals. Such adhesives are usually provided in the form of film, and the above curable resinous materials can be produced according to the methods described above and formed into a film or any other suitable format for use in bonding composite components together.

It is believed that the partially undissolved thermoplastic will improve the toughness characteristics of such adhesives. Moreover, because of the only partial dissolution of the thermoplastic material into the resinous matrix material, the adhesives are of relatively low viscosity, when compared with similar materials comprising fully dissolved thermoplastic. This provides improved handling and processing characteristics over conventional adhesives.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A cured resinous material comprising resinous matrix material with thermoplastic material therein, **characterised in that** some of said thermoplastic material is fully dissolved in the resinous matrix material and some of the said thermoplastic material is only partially dissolved in the resinous matrix material from particles with a mean diameter size of between 5µm (microns) and 100µm (microns) to particles of undissolved thermoplastic with an average diameter size of between 1µm (microns) and 80µm (microns) .

2. A cured resinous material according to claim 1, **characterised in that** the partially dissolved thermoplastic material forms particles or grains of undissolved thermoplastic within the resinous matrix material.

3. A cured resinous material according to claim 2, **characterised in that** at least some of the particles of partially dissolved thermoplastic are surrounded by a region of dissolved thermoplastic material.

4. A cured resinous material according to claim 3, **characterised in that** the degree of dissolution of the partially dissolved thermoplastic material in said region increases in a direction away from the undissolved thermoplastic material.

5. A cured resinous material according to any preceding claim, **characterised in that** the average diameter of undissolved particle is in the range of 5 to 50 microns.

6. A cured resinous material according to any of claims 1 to 5, **characterised in that** the cured resinous material is at least partially impregnated into a fibrous reinforcement material to form a fibre-reinforced composite structure or article.

7. A cured resinous material according to any of claims 1 to 6, **characterised in that** the cured resinous material is an adhesive.

8. An article comprising a cured resinous material as described in any of claims 1 to 7.

9. A curable resinous material comprising a resinous matrix material and thermoplastic material distributed within the resinous matrix material, **characterised in that** some of said thermoplastic material is fully soluble in the resinous matrix material and some of the thermoplastic material is only partially soluble in the resinous matrix material when subjected to cure temperatures of up to 180°C, the partially soluble thermoplastic material comprising particles with a mean diameter size of between 5µm (microns) and 100µm (microns) that reduces to between 1µm (micron) and 80µm (microns) when the curable resinous material is cured.

10. A curable resinous material according to claim 9, **characterised in that** the dissolved thermoplastic material is distributed within the resinous matrix material to form a homogenous mix.

11. A curable resinous material according to either of claims 9 or 10, **characterised in that** the thermoplastic material comprises one or more of a Polyether Sulphone, Polyetherimide, Polyarylsulfone, Polyphenylene Sulfide, Polyimide, Polysiloxane, Polyamide and Rubber.

12. A curable resinous material according to any of claims 9 to 11, **characterised in that** the partially soluble thermoplastic material is the same thermoplastic material as the fully soluble thermoplastic material.

13. A curable resinous material according to any of claims 9 to 12, **characterised in that** the particle size is 20-80µm before cure.

14. A curable resinous material according to any of claims 9 to 13, **characterised in that** the mean undissolved particle size of the partially soluble thermoplastic reduces to between 5µm (microns) and 50µm (microns) upon cure.

15. A curable resinous material according to any of claims 9 to 14, **characterised in that** the said partially soluble thermoplastic material comprises different physical and/or chemical characteristics than said fully soluble thermoplastic material which enable it to remain partially undissolved.

16. A curable resinous material according to any of claims 9 to 15, **characterised in that** the resinous matrix material comprises a thermoset resin material.

17. A curable resinous material for use in forming fibre-reinforced composite materials, **characterised in that** the curable resinous material comprises a resinous matrix material and thermoplastic material distributed within the resinous matrix material, some of the thermoset material is fully soluble in the resinous matrix material and some of the thermoplastic material is only partially soluble in the resinous matrix material when subjected to cure temperatures of up to 180°C.

18. A moulding material comprising a curable resinous material as defined in any of claims 9 to 17, and a fibrous reinforcement material.

19. A method of producing a curable resinous material comprising mixing curable resinous matrix material with thermoplastic material under conditions such that some of the thermoplastic material is fully dissolved and some of the thermoplastic material is only partially dissolved in the resinous matrix material when the resinous material is cured.

20. A method of producing cured resinous material, comprising the steps of
(a) preparing a curable resinous material by mixing thermoplastic material with a curable resinous matrix material, and
(b) curing said resinous material under conditions so that some of said thermoplastic material is fully dissolved in the resinous matrix material and some of said thermoplastic material is only partially dissolved from a mean particle size of between 5µm (microns) and 100µm (microns) to a mean particle size of between 1µm (micron) and 80µm (microns).

21. A method of producing a cured resinous material according to claim 20, **characterised in that** the resinous material is cured at temperatures no greater than 180°C.

22. An article comprising a resinous matrix material with thermoplastic material therein, cured to a condition wherein at least some of the said thermoplastic material is present as partially dissolved particles.

23. A method of producing cured resinous material, comprising the steps of
(a) preparing curable resinous material by mixing thermoplastic material with resinous matrix material, and
(b) curing said resinous material under conditions so that at least some of said thermoplastic material remains partially undissolved in the resinous matrix material.
